# EUROPÄISCHE PATENTSCHRIFT

(11) **EP 2 370 227 B1**
(45) Veröffentlichungstag und Bekanntmachung des Hinweises auf die Patenterteilung: **09.04.2014**
(21) Anmeldenummer: 09771729.2
(22) Anmeldetag: 23.11.2009
(51) Int. Cl.: B23F 21/18, B23F 5/22

(54) **VORRICHTUNG UND VERZAHNEN VON WERKRÄDERN MIT EINEM KONISCHEN WÄLZFRÄSER**
DEVICE AND FORMING OF WORKING GEARS USING A CONICAL HOB
DISPOSITIF DE TAILLAGE DE ROUES À USINER AU MOYEN D'UNE FRAISE MÈRE CONIQUE

(30) Priorität: 24.11.2008 DE 102008037578
(43) Veröffentlichungstag der Anmeldung: 05.10.2011
(73) Patentinhaber: Profilator GmbH & Co. KG, 42329 Wuppertal (DE)
(72) Erfinder: SCHULZ, Mario, 42349 Wuppertal (DE)
(74) Vertreter: Grundmann, Dirk
(86) Internationale Anmeldenummer: PCT/EP2009/065642
(87) Internationale Veröffentlichungsnummer: WO 2010/058005

(56) Entgegenhaltungen:
- EP-A1- 0 497 309
- DE-C- 896 907
- US-A- 1 454 135
- US-A- 4 722 238

## Beschreibung

Die Erfindung betrifft eine Vorrichtung zum Verzahnen von Werkrädern mit einem Wälzfräser, wobei das Werkrad von einer Werkstückspindel um eine Werkstückspindelachse drehantreibbar ist, wobei der Wälzfräser von einer Werkzeugspindel um eine Werkzeugspindelachse in einem vorbestimmten Drehzahlverhältnis zum Werkrad drehantreibbar ist und Fräszähne aufweist, deren Fräszahnfüße in einem in der Werkzeugspindelachse liegenden Längsschnitt durch den Wälzfräser auf einer Fußlinie und deren Fräszahnköpfe in dem Längsschnitt auf einer Kopflinie verlaufen, wobei Vorschubmittel vorgesehen sind, mit denen der Wälzfräser relativ gegenüber dem Werkrad verlagerbar ist, wobei eine Axialkomponente des Vorschubs in Richtung der Werkstückspindelachse und eine Radialkomponente des Vorschubs im Wesentlichen quer dazu in Richtung auf die Werkstückspindelachse aufweist.

Die Erfindung betrifft darüber hinaus ein Verfahren zum Verzahnen von Werkrädern mit einem Wälzfräser, wobei das Werkrad von einer Werkstückspindel um eine Werkstückspindelachse drehangetrieben wird, wobei der Wälzfräser von einer Werkzeugspindel um eine Werkzeugspindelachse in einem vorbestimmten Drehzahlverhältnis zum Werkrad drehangetrieben wird und Fräszähne aufweist, deren Fräszahnfüße in einem in der Werkzeugspindelachse liegenden Längsschnitt durch den Wälzfräser auf einer Fußlinie und deren Fräszahnköpfe in dem Längsschnitt auf einer Kopflinie verlaufen, wobei der Wälzfräser relativ gegenüber dem Werkrad vorgeschoben wird, wobei der Vorschub eine Axialkomponente in Richtung der Werkstückspindelachse und eine Radialkomponente im Wesentlichen quer dazu auf die Werkstückspindelachse aufweist.

Die Erfindung betrifft darüber hinaus einen Wälzfräser zur Verwendung mit einer Vorrichtung oder bei einem Verfahren gemäß einem der vorangehenden Ansprüche oder insbesondere danach, wobei der Wälzfräser um eine Drehachse angeordnete Fräszähne aufweist, deren Fräszahnfüße in dem Längsschnitt auf einer Kopflinie verlaufen.

Die Erfindung betrifft darüber hinaus ein Verfahren zum Fertigen eines derartigen Wälzfräsers.

Mit dem eingangs genannten Verfahren wird unter Benutzung einer eingangs beschriebenen Vorrichtung und der Verwendung eines eingangs beschriebenen Wälzfräsers ein grob verzahntes, bevorzugt aber unverzahntes Werkrad mit einer Umfangsverzahnung versehen. Die Werkzeugachse liegt dabei in einer z-Richtung und die Werkstückachse in einer zur z-Richtung senkrecht stehenden x-Achse. Die beiden Achsen sind in Richtung einer γ-Achse voneinander beabstandet. Die Zustellung erfolgt über die x-Achse, wobei hierzu entweder das Werkstück oder das Werkzeug relativ gegenüber dem Maschinenbett verlagert werden kann. Zufolge eines Vorschubs in x-Richtung, also im Wesentlichen quer zur Drehachse des Wälzfräsers wird in die Außeroberfläche des Werkrades eine Verzahnung gefräst. Die Fräszähne sind entlang einer Wendelganglinie schneckenradartig um die Drehachse des Wälzfräsers angeordnet. Wälzfräser und Werkrad werden in einem festen Drehzahlverhältnis angetrieben, wobei einhergehend mit dem Vorschub auch eine relative Änderung der Fasenlage vorgesehen werden kann, wenn der Wälzfräser zusätzlich in Richtung seiner Drehachse, also der Shiftachse vorgeschoben wird.

Um Zähne mit geneigten Zahnflanken zu erzeugen, wobei die Zahnflanken jedes Zahnes bezogen auf die Achsrichtung des Werkrades spitzwinklig aufeinander zu laufen, wird der Wälzfräser zusätzlich in Richtung auf die Werkstückspindelachse vorgeschoben. Der Vorschub des Wälzfräsers relativ gegenüber dem Werkrad enthält somit neben einer Axialkomponente in Richtung der Werkstückspindelachse auch eine Radialkomponente im Wesentlichen quer dazu in Richtung auf die Werkstückspindelachse.

Es wird als nachteilhaft angesehen, dass mit diesem Fertigungsverfahren auch die Böden der zwischen den Zähnen angeordneten Zahnlücken geneigt zur Werkstückspindelachse verlaufen. Die Zahnlücken liegen im Wesentlichen auf einer Kegelstumpfmantelfläche. Die Zähne haben somit geneigt zur Werkradachse verlaufende Zahnfüße. Der Fußkreis, also der Abstand der Fußpunkte vom Zentrum des Werkrades ist auf den beiden voneinander weg weisenden Stirnseiten des Werkrades verschieden. Dies hat eine Schwächung des gefertigten Zahnrades zur Folge.

Die DE 896907 beschreibt einen Wälzfräser mit in Achsrichtung angeordneten, unterschiedlich groß gestalteten Zähnen zur Fertigung von Stirnkegelrädern. Der Fräser wird bei der spanenden Bearbeitung sowohl in Radialrichtung als auch in Axialrichtung zum Werkstück zugestellt. Einhergehend mit dieser Zustellung wird der drehangetriebene Fräser auch in Achsrichtung derart bewegt, dass im radial äußeren Bereich der Kegelräder die größeren Zähne und im radial inneren Bereich die kleineren Zähne ins Werkrad eingreifen. Dort verläuft die Kopflinie der Fräszahnköpfe um einen spitzen Winkel geneigt zur Fußlinie. Sowohl Fußlinie als auch Kopflinie sind gegenüber der Drehachse des Wälzfräsers geneigt.

Die US 1,454,135 beschreibt ein Fertigungsverfahren zum Fräsen von Sägezähnen. Dort wird ein Fräswerkzeug mit Zähnen unterschiedlicher Größe bzw. Konturen verwendet, so dass sukzessive tiefer werdende Zahnlücken gefräst werden können.

Die EP 0497309 offenbart ein drehangetriebenes Werkzeug, das in Achsrichtung verschieden große Zähne aufweist. Sowohl die Fußlinie als auch die Kopflinie der Zähne sind gegenüber der Drehachse geneigt.

Die US 4,722,238 offenbart ein Verfahren zum Erzeugen einer Riffelung mit einem verzahnten Werkzeug, mit dem sukzessiv tiefer werdende Zahnlücken gefräst werden können.

Der Erfindung liegt die Aufgabe zugrunde, die eingangs genannte Vorrichtung bzw. das eingangs genannte Verfahren technisch zu verbessern.

Gelöst wird die Aufgabe durch die in den Ansprüchen angegebene Erfindung.

Mit der erfindungsgemäßen Weiterbildung der gattungsgemäßen Vorrichtung, des gattungsgemäßen Verfahrens bzw. des gattungsgemäßen Wälzfräsers können Kupplungskörper insbesondere in Form scheibenförmiger Zahnräder mit gradem Fußkreis und geneigten Zahnflanken gefertigt werden. Die dadurch erreichte Zahnverstärkung wird erfindungsgemäß darauf zurückgeführt, dass die Fußlinie um einen spitzen Winkel α geneigt zur Kopflinie verläuft. Bei dem Verfahren unter Verwendung eines derartig ausgestalteten Wälzfräsers erhält der Vorschub eine zusätzliche Komponente in der Shiftrichtung, wobei die Geschwindigkeiten der insgesamt drei Vorschubskomponenten derart auf den Neigungswinkel α abgestimmt sind, dass die Fräszahnköpfe der in Eingriff stehenden Fräszähne jeweils eine maximale Eingriffstiefe in das Werkrad erreichen, die an jeder Axialposition bezogen auf die x-Achse dieselbe ist. Da der Abstand der Fräszahnköpfe in Achsrichtung des Wälzfräsers in Richtung des Winkelscheitels des Neigungswinkels α geringer wird, werden die Abstände der Zahnflanken der Zähne des Werkrades mit zunehmendem Vorschub in y-Richtung wegen des sich dabei vermindernden Abstandes zwischen Werkstückspindelachse und Werkzeugspindelachse größer. Dies hat zur Folge, dass als Ergebnis spitzwinklig verlaufende Zahnflanken an den Zähnen des Werkrades aber parallel zur Konturachse des Werkrades verlaufende Fußlinien erzeugt werden. Zufolge der geneigt zur Fußlinie verlaufenden Kopflinie vermindert sich die Zahnhöhe hin zum Scheitel des Neigungswinkels. In einer bevorzugten Ausgestaltung der Erfindung verläuft die Fußlinie parallel zur Drehachse des Wälzfräsers und die Kopflinie geneigt dazu. Die Zahnfüße bzw. die Böden der zwischen den Zähnen liegenden Zahnlücken liegen bei dieser Variante auf einer gedachten Zylindermantelfläche. Die Zahnköpfe, also die Kopfflächen der Zähne, liegen bei dieser Variante auf einer Kegelstumpfmantelfläche, also auf einer konischen Fläche. Um einen derartigen Wälzfräser herzustellen, wird das in den Ansprüchen angegebene Verfahren verwendet. Es wird zunächst ein Wälzfräser gefertigt, bei dem die auf einer Wendelganglinie um die Drehachse angeordneten Fräszahnköpfe einen gleichbleibenden Radialabstand zur Drehachse besitzen. Sowohl die Zahnlücken als auch die Zahnköpfe verlaufen dann in jeweils gedachten Zylindermantelflächen. Die Zähne sind in Achsrichtung des Wälzfräsers voneinander gleich beabstandet. In einem darauf folgenden Verfahrensschritt werden die Fräszahnköpfe abgeschliffen, bis sie auf einer gedachten Kegelstumpfmantelfläche liegen, wobei der Kegelstumpfwinkel dem vorherbestimmten Neigungswinkel entspricht, der bevorzugt in einem Bereich zwischen 1° und 10° liegt. Bevorzugt liegt der Neigungswinkel im Bereich zwischen 3° und 5°. Die zur Ausübung des Verfahrens verwendete Vorrichtung besitzt ein Maschinenbett und in bekannter Weise am Maschinenbett verlagerbar befestigte Trägerschlitten und Spindelantriebe. Die Werkstückspindel und die Werkzeugspindel werden jeweils von einem elektrischen Einzelantrieb angetrieben. Die beiden Einzelantriebe sind mittels einer elektronischen Steuerung synchronisiert. Sie drehen in einem festen Drehzahlverhältnis. Die Werkstückspindelachse verläuft im Wesentlichen quer zur Werkzeugspindelachse. Es sind lineare Verlagerungsantriebe vorgesehen, um das von der Werkzeugspindel angetriebene Wälzfräswerkzeug in Achsrichtung bezogen auf die Werkstückachse, in Radialrichtung bezogen auf die Werkstückachse und in Richtung der Werkzeugachse vorzuschieben. Die Steuerung ist so eingerichtet, dass der Vorschub in der oben beschriebenen Weise an den Neigungswinkel und an das Zahnmodul angepasst ist.

Ein Ausführungsbeispiel der Erfindung wird nachfolgend anhand beigefügter Zeichnungen erläutert. Es zeigen:

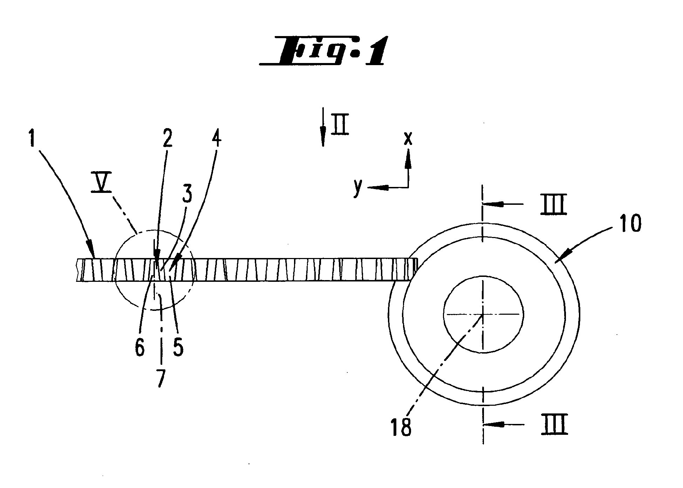

- Fig. 1: in einer Seitenansicht die räumliche Anordnung eines Wälzfräsers 10 in Bezug auf ein zu verzahnendes Werkrad 1 in einer xy-Ebene;

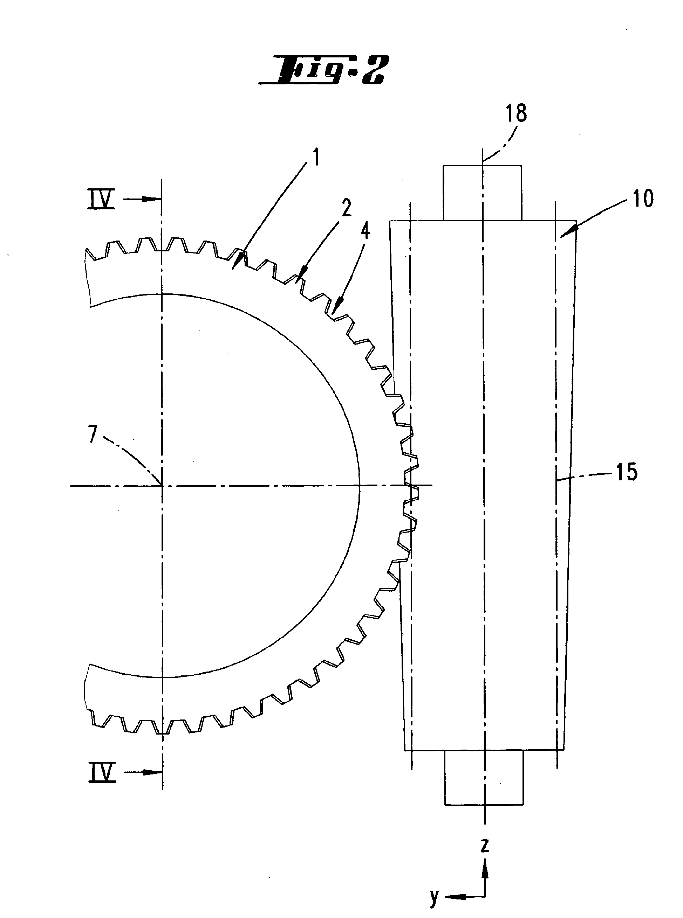

- Fig. 2: die räumliche Anordnung in der xz-Ebene;
- Fig. 3: einen Schnitt gemäß der Linie III - III in Fig. 1;
- Fig. 4: einen Schnitt gemäß der Linie IV - IV in Fig. 2 und
- Fig. 5: eine Ansicht gemäß Pfeil 5 in Fig. 4 auf den Umfang eines verzahnten Werkrades.

Eine Werkzeugmaschine zur Verwendung im Zusammenhang mit der vorliegenden Erfindung besitzt ein nicht dargestelltes Maschinenbett, zwei elektrische Einzelantriebe, die in den Zeichnungen lediglich durch eine Werkstückspindelachse 7 und eine Werkzeugspindelachse 18 funktionell dargestellt sind. Die Einzelantriebe werden mit einer elektronischen Steuerung synchronisiert angetrieben. Der Antrieb erfolgt in einem festen Drehzahlverhältnis, wobei auch eine stetige Änderung der Fasenlage vorgesehen ist. Die Spindeln besitzen geeignete Futter zur Aufnahme eines zu verzahnenden Werkrades 1, welches im Ausführungsbeispiel scheibenartig ausgebildet ist, und eines Wälzfräsers 10, welcher auf seiner Außenmantelfläche wendelgangförmig angeordnete Fräszähne 11 aufweist. Im Ausführungsbeispiel dreht sich das Werkrad 1 um eine in der x-Achse liegende Werkstückspindelachse. Der Wälzfräser dreht sich um eine in der z-Achse liegende Werkzeugspindelachse 18. Die Werkstückspindelachse 7 liegt in γ-Richtung versetzt zur Werkzeugspindelachse 18.

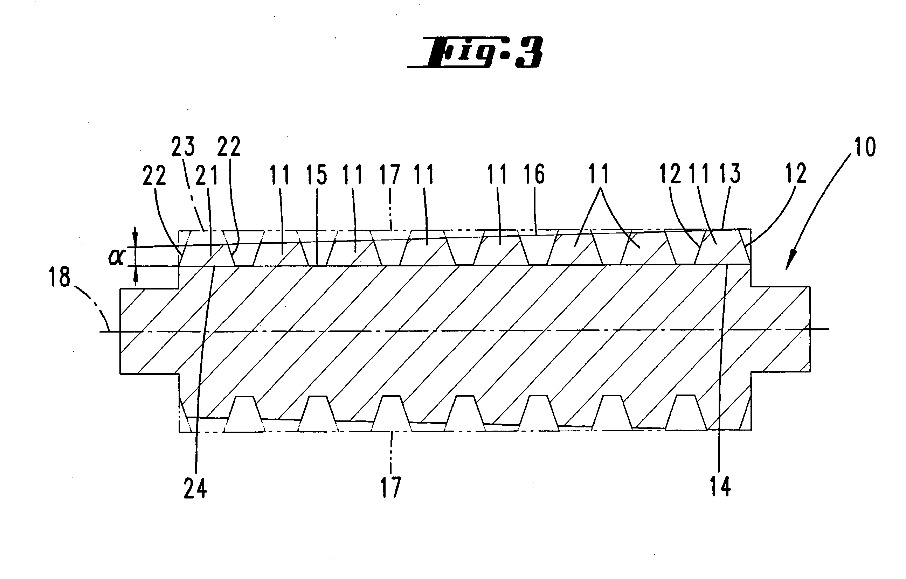

Es wird ein Wälzfräser verwendet, der wie folgt gefertigt worden ist. Der Wälzfräser besitzt eine Drehachse 18 und im Rohzustand eine auf einer Zylindermantelfläche 17 verlaufende Außenkontur. In dem in Figur 3 dargestellten Längsschnitt durch den Wälzfräser, der durch die Werkzeugdrehachse 18 verläuft, ist diese Konstruktion Zylindermantelfläche mit der Konstruktionskopflinie 17 angedeutet. Durch Schleifen oder ein anderes geeignetes formgebendes Verfahren werden in die Zylindermantelfläche des Rohlings auf einer Wendelganglinie verlaufende Fräszähne 11 eingearbeitet. Die Fräszähne besitzen in der Konstruktionszylindermantelfläche 17 liegende Fräszahnkopfflächen, stumpfwinklig geneigt dazu verlaufende Fräszahnflanken 12 und in einer gedachten Zylindermantelfläche verlaufende Zahnlückenböden, in denen die Fräszahnfüße 14, 24 verlaufen. Die Lücken zwischen den Fräszähnen 11 haben somit im Längsschnitt einen im Wesentlichen V-förmigen Verlauf. Die Zähne sind im Wesentlichen gleich gestaltet, so dass sie in der Längsschnittdarstellung gemäß Figur 3 eine Fußlinie 15 und eine Konstruktionskopflinie 17 ausbilden.

In einem weiteren Verfahrensschritt werden die Köpfe der Fräszähne abgeschliffen, bis die Fräszahnköpfe 13, 23 mit ihren Kopfflächen in einer gedachten Kegelstumpfmantelfläche verlaufen, die in der Figur 3 als Kopflinie 16 dargestellt ist. Die Kopflinie 16 schneidet die Fußlinie 15 spitzwinklig in einem Winkel α, der in einem Bereich zwischen 1° und 10° liegen kann. Bevorzugt liegt der Winkel α bei 4°.

Aus der Figur 3 ist zu entnehmen, dass der ganz rechts dargestellte Zahn 11, welcher vom Scheitel des Winkels α weg weisend angeordnet ist, den in Achsrichtung kürzesten Kopf 13 aber längsten Fräszahnflanken 12 aufweist. Der in der Figur 3 dem Scheitel des Neigungswinkels α nächstliegendste Fräszahn 21 besitzt hingegen die kürzesten Fräszahnflanken 22, aber den längsten Fräskopf 13. Zwischen zwei Fräszahnflanken 12, 22 verläuft der Zahnlückengrund auf einer Zylinderfläche.

Zur Durchführung des Verfahrens wird zunächst der Wälzfräser 10 dem Werkrad 1 zugestellt. Der Vorschub beim Fräsen der Zähne 2 des Werkrades 1 ist eine überlagerte Bewegung in Achsrichtung (x-Achse) in Radialrichtung (y-Achse) und in Richtung der Shiftachse des Wälzfräsers 10 (z-Richtung). Dabei sind die Größen der Vorschubskomponenten so an das Modul der Zähne 2 und an den Neigungswinkel α angepasst, dass die Wälzfräszahnköpfe 13, 23 im Wesentlichen eine gleichbleibende maximale Eindringtiefe in das Werkrad 1 aufweisen. Wegen der kombinierten Vorschubsbewegung in Radialrichtung (y-Richtung) und in Richtung der Shiftachse (z-Richtung) werden Zähne 2 mit Zahnflanken 3 gefertigt, bei denen die Zahnflanken 3 eines Zahnes in Ebenen verlaufen, die sich spitzwinklig schneiden. Die Zähne werden somit in Richtung der Konturachse 7 des Werkrades 1 schmaler und die zwischen den Zähnen 2 liegenden Zahnlücken 4 breiter.

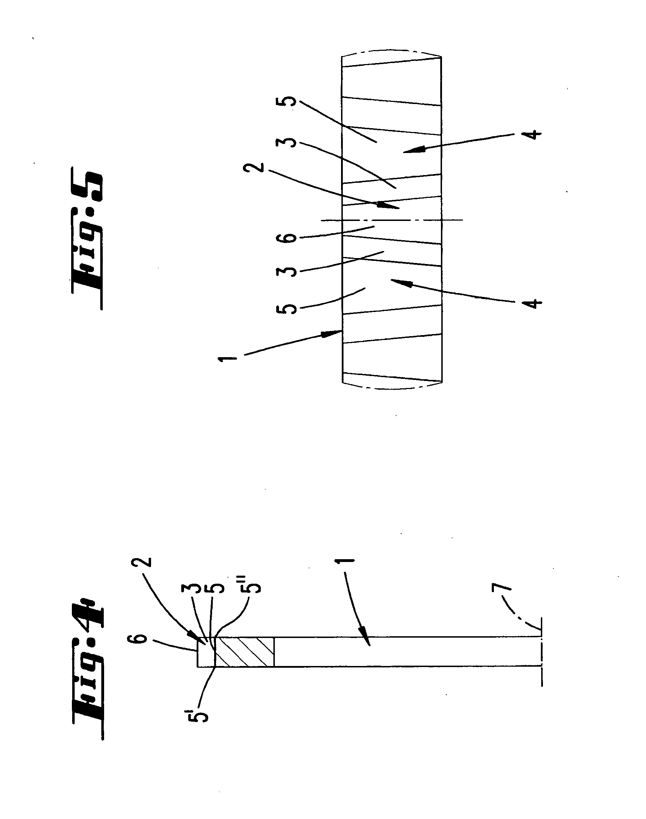

Wie der Figur 4 zu entnehmen ist, die einen Schnitt durch ein fertig verzahntes Werkrad zeigt, verlaufen die Zahnfüße 5 auf Konturlinien, die parallel zur Konturachse 7 des Werkrades 1 verlaufen. Der Fußpunkt 5' auf der einen Stirnseite des Werkrades 1 hat denselben Abstand zur Konturachse 7 des Werkrades 1 wie der Fußpunkt 5" auf der gegenüberliegenden Seite zur Konturachse 7 des Werkrades 1.

Wie der Ansicht gemäß Figur 5 zu entnehmen ist, verlaufen die Zahnflanken 3 aber in einem Neigungswinkel.

Die Überlagerung der Zustellbewegung in der xy-Ebene um eine weitere Komponente in der Shiftachse führt zu einem positiven Nebeneffekt: Es sind jetzt mehrere Schneiden im Eingriff. Hierdurch wird die Flankenqualität verbessert. Es werden mehr Hüllschnitte gefertigt als wenn der Vorschub lediglich in der xy-Richtung erfolgt, wie es beim Stand der Technik der Fall ist.

## Patentansprüche

1. Vorrichtung zum Verzahnen von Werkrädern (1), mit einem Wälzfräser (10), wobei das Werkrad (1) von einer Werkstückspindel um eine Werkstückspindelachse (7) drehantreibbar ist, wobei der Wälzfräser (10) von einer Werkzeugspindel um eine Werkzeugspindelachse (18) in einem vorbestimmten Drehzahlverhältnis zum Werkrad (1) drehantreibbar ist und Fräszähne (11, 21) aufweist, deren Fräszahnfüße (14, 24) in einem in der Werkzeugspindelachse (18) liegenden Längsschnitt durch den Wälzfräser (10) auf einer Fußlinie (15) und deren Fräszahnköpfe (13, 23) in dem Längsschnitt auf einer Kopflinie (16) verlaufen, wobei die Kopflinie (16) um einen spitzen Winkel (α) geneigt zur Fußlinie (15) verläuft und wobei Vorschubmittel vorgesehen sind, mit denen der Wälzfräser (10) relativ gegenüber dem Werkrad (1) verlagerbar ist, wobei eine Axialkomponente des Vorschubs in Richtung der Werkstückspindelachse (7) und eine Radialkomponente des Vorschubs im Wesentlichen quer dazu in Richtung auf die Werkstückspindelachse (7) verläuft, **dadurch gekennzeichnet, dass** die Fußlinie (15) parallel zur Drehachse des Wälzfräsers verläuft und die Fräszähne (11, 21) bezogen auf eine gedachte, parallel zur Fußlinie (15) verlaufende Konstruktionskopflinie (17) gleich beabstandet und im Wesentlichen gleich gestaltet sind.

2. Verfahren zum Verzahnen von Werkrädern (1) mit einem Wälzfräser (10), wobei das Werkrad (1) von einer Werkstückspindel um eine Werkstückspindelachse (7) drehangetrieben wird, wobei der Wälzfräser (10) von einer Werkzeugspindel um eine Werkzeugspindelachse (18) in einem vorbestimmten Drehzahlverhältnis zum Werkrad (1) drehangetrieben wird und Fräszähne (11, 21) aufweist, deren Fräszahnfüße (14, 24) in einem in der Werkzeugspindelachse (18) liegenden Längsschnitt durch den Wälz-fräser (10) auf einer Fußlinie (15) und deren Fräszahnköpfe (13, 23) in dem Längsschnitt auf einer Kopflinie (16) verlaufen, wobei die Kopflinie (16) um einen spitzen Winkel (α) geneigt zur Fußlinie (15) verläuft und wobei der Wälzfräser relativ gegenüber dem Werkrad vorgeschoben wird, wobei der Vorschub eine Axialkomponente in Richtung der Werkstückspindelachse (7), eine Radialkomponente im Wesentlichen quer dazu auf die Werkstückspindelachse (7) und eine Shiftkomponente (z-Richtung) in Richtung der Werkzeugspindel (18) aufweist, **dadurch gekennzeichnet, dass** ein Wälzfräser (10) verwendet wird, bei dem die Fußlinie (15) parallel zur Drehachse des Wälzfräsers verläuft und die Fräszähne (11, 21) bezogen auf eine gedachte, parallel zur Fußlinie (15) verlaufende Konstruktionskopflinie (17) gleich beabstandet und im Wesentlichen gleich gestaltet sind, wobei der Vorschub derart erfolgt, dass die Wälzfräsköpfe (13, 23) im Wesentlichen eine gleichbleibende maximale Eindringtiefe in das Werkrad (1) aufweisen.

3. Vorrichtung gemäß Anspruch 1 oder Verfahren gemäß Anspruch 2, **dadurch gekennzeichnet, dass** die Werkstückspindelachse (7) in einer x-Richtung liegt, die Werkzeugspindelachse (18) in einer senkrecht zur x-Richtung verlaufenden z-Richtung liegt und die Werkstückspindelachse (7) von der Werkzeugspindelachse (18) in einer senkrecht zur x-Richtung und senkrecht zur z-Richtung verlaufenden γ-Richtung beabstandet ist.

4. Verfahren nach einem der Ansprüche 2 oder 3, **dadurch gekennzeichnet, dass** die Vorschubskomponente in Shiftrichtung und die Vorschubskomponente in Radialrichtung derart an den Neigungswinkel (α) angepasst ist, dass die Zahnfüße (5) der am Werkrad gefrästen Zähne (2) auf einer Zylindermantelfläche bezogen auf die Werkstückspindelachse (7) verlaufen.

5. Wälzfräser (10) zur Verwendung mit einer Vorrichtung oder bei einem Verfahren gemäß einem der vorangehenden Ansprüche, wobei der Wälzfräser (10) wendelgangförmig um eine Drehachse (7) angeordnete Fräszähne (11) aufweist, deren Fräszahnfüße (14, 24) im Längsschnitt auf einer Fußlinie (15) verlaufen, **dadurch gekennzeichnet, dass** die Fußlinie (15) parallel zur Werkzeugspindelachse (18) verläuft und die Fräszähne (11, 21) bezogen auf eine gedachte, parallel zur Fußlinie (15) verlaufende Konstruktionskopflinie (17) gleich beabstandet und im Wesentlichen gleich gestaltet sind.

6. Vorrichtung, Verfahren oder Wälzfräser nach einem der vorangehenden Ansprüche, **dadurch gekennzeichnet, dass** die Fräszahnflanken (12, 22) stumpfwinklig geneigt zum Kopf (13, 23) bzw. Fuß (14,24) verlaufen, so dass im Längsschnitt im Wesentlichen V-förmige Fräszahnlücken entstehen.

7. Vorrichtung, Verfahren oder Wälzfräser nach einem der vorhergehenden Ansprüche, **dadurch gekennzeichnet, dass** der Neigungswinkel (α) im Bereich zwischen 2° und 10° liegt.

8. Verfahren zum Fertigen eines Wälzfräsers gemäß einem der vorhergehenden Ansprüche, wobei mit Hilfe eines spanabhebenden Verfahrens zunächst sich auf einer Wendelganglinie um die Drehachse (18) des Wälzfräsers angeordnete, gleich beabstandete und im Wesentlichen gleich gestaltete Fräszähne (11, 21) gefertigt werden, deren Fräszahnfüße (14, 24) auf einer Fußlinie (15) verlaufen und deren Wälzzahnköpfe (13, 23) auf einer dazu parallelen Konstruktionskopflinie (17) verlaufen, **gekennzeichnet durch** ein anschließendes konisches Schleifen der Hüllfläche des Wälzfräsers (10), bis die Fräszahnköpfe (13, 23) auf einer Kopflinie (16) verlaufen, die um einen Winkel (α) geneigt zur Fußlinie (15) verläuft.

## Claims

1. Device for toothing working gears (1) using a hobbing cutter (10), the working gear (1) being rotatably drivable by a workpiece spindle about a workpiece-spindle axis (7), the hobbing cutter (10) being rotatably drivable by a tool spindle about a tool-spindle axis (18) in a predetermined rotational relationship with the working gear (1) and having milling teeth (11, 21), the milling-teeth roots (14, 24) of which extend on a root line (15) through the hobbing cutter in a longitudinal section located in the tool-spindle axis (18), and the milling-teeth tips (13, 23) of which extend in the longitudinal section on a tip line (16), the tip line (16) extending at an acute angle (α) to the root line (15) and feed means being provided by means of which the hobbing cutter (10) is displaceable relative to the working gear (1), an axial component of the feed extending towards the workpiece-spindle axis (7) and a radial component of the feed extending substantially transverse thereto towards the workpiecespindle axis (7), **characterised in that** the root line (15) extends parallel to the axis of rotation of the hobbing cutter, and the milling teeth (11, 21) are spaced equally in relation to an imaginary structure-tip line (17), which is parallel to the root line (15), and are substantially homogenous.

2. Method for toothing working gears (1) using a hobbing cutter (10), the working gear (1) being rotatably drivable by a workpiece spindle about a workpiece-spindle axis (7), the hobbing cutter (10) being rotatably drivable by a tool spindle about a tool-spindle axis (18) in a predetermined rotational relationship with the working gear (1) and having milling teeth (11, 21), the milling-teeth roots (14, 24) of which extend on a root line (15) through the hobbing cutter (10) in a longitudinal section located in the tool-spindle axis (18) and the milling-teeth tips (13, 23) of which extend in the longitudinal section on a tip line (16), the tip line (16) extending at an acute angle (α) to the root line (15) and the hobbing cutter being advanced relative to the working gear, the feed having an axial component in the direction of the workpiece-spindle axis (7), a radial component substantially transverse thereto in the direction of the workpiece-spindle axis (7) and a shift component (z-direction) in the direction of the tool spindle (18), **characterised in that** a hobbing cutter (10) is used in which the root line (15) extends parallel to the axis of rotation of the hobbing cutter, and the milling teeth (11, 21) are spaced equally in relation to an imaginary structure-tip line (17), which is parallel to the root line (15), and are substantially homogenous, the feed taking place in such a way that the hobbing tips (13, 23) have a maximum penetration depth into the working gear (1) which remains substantially the same.

3. Device according to claim 1 or method according to claim 2, **characterised in that** the workpiece-spindle axis (7) is in an x-direction, the tool-spindle axis (18) is in a z-direction which is perpendicular to the x-direction, and the workpiece-spindle axis (7) is spaced apart from the tool-spindle axis (18) in a y-direction, which is perpendicular to the x-direction and perpendicular to the z-direction.

4. Method according to either claim 2 or claim 3, **characterised in that** the feed component in the shift direction and the feed component in the radial direction are adapted to the angle of inclination (α) in such a way that the roots (5) of the teeth (2) milled on the working gear extend on a cylindrical shell in relation to the workpiece-spindle axis (7).

5. Hobbing cutter (10) for use with a device or in a method according to any of the preceding claims, the hobbing cutter (10) having milling teeth (11) arranged in the form of a helical gear about an axis of rotation (7), the milling-teeth roots (14, 24) of which extend in the longitudinal section on a root line (15), **characterised in that** the root line (15) is parallel to the tool-spindle axis (18), and the milling teeth (11, 21) are spaced equally in relation to an imaginary structure-tip line (17), which is parallel to the root line (15), and are substantially homogenous.

6. Device, method or hobbing cutter according to any of the preceding claims, **characterised in that** the milling-teeth flanks (12, 22) extend at an obtuse angle to the tip (13, 23) and root (14, 24), thereby producing substantially V-shaped milling-teeth gaps in the longitudinal section.

7. Device, method or hobbing cutter according to any of the preceding claims, **characterised in that** the angle of inclination (α) is in the range between 2° and 10°.

8. Method for producing a hobbing cutter according to any of the preceding claims, first, substantially homogenous milling teeth (11, 21), which are arranged at an equal spacing on a helical-gear line about an axis of rotation (18) of the hobbing cutter, being produced by means of a cutting process, the milling-teeth roots (14, 24) of which milling teeth extend on a root line (15) and the rolling-teeth tips (13, 23) of which milling teeth extend on a structure-tip line (17), which is parallel thereto, **characterised by** a subsequent conical grinding of the lateral area of the hobbing cutter (10) until the milling-teeth tips (13, 23) extend on a tip line (16) which is at an angle (α) to the root line (15).

## Revendications

1. Dispositif pour tailler des dents dans des roues à usiner (1), ayant une fraise-mère (10), dans lequel la roue à usiner (1) est susceptible d'être entraînée en rotation par une broche porte-pièce autour d'un axe (7) de la broche porte-pièce, dans lequel la fraise-mère (10) est susceptible d'être entrainée en rotation par une broche porte-outil autour d'un axe (18) de la broche porte-outil avec un rapport de vitesse de rotation prédéterminé par rapport à la roue à usiner (1), la fraise-mère présentant des dents de fraise (11, 21) dont les bases (14, 24) sont situées sur une ligne de base dans une vue en coupe longitudinale à travers la fraise-mère suivant l'axe (18) de la broche porte-outil et dont les têtes (13, 23) s'étendent sur une ligne de tête (16) dans la coupe longitudinale, la ligne de tête (16) étant inclinée d'un angle aigu (α) par rapport à la ligne de base (15) et dans lequel sont prévus des moyens de déplacement vers l'avant qui permettent de déplacer la fraise-mère (10) par rapport à la roue à usiner (1), une composante axiale du déplacement s'étendant en direction de l'axe (7) de la broche porte-pièce et une composante radiale du déplacement s'étendant sensiblement transversalement à la direction de l'axe (7) de la broche porte-pièce, **caractérisé en ce que** la ligne de base (15) s'étend parallèlement à l'axe de rotation de la fraise-mère et que par rapport à une ligne de tête imaginaire de construction (17) s'étendant parallèlement à la ligne de base (15), les dents de fraise (11, 21) sont régulièrement espacées et présentent sensiblement une même conformation.

2. Procédé pour tailler des dents dans des roues à usiner (1) avec une fraise-mère (10), dans lequel la roue à usiner (1) est entraînée en rotation par une broche porte-pièce autour d'un axe (7) de la broche porte-pièce, dans lequel la fraise-mère (10) est entrainée en rotation par une broche porte-outil autour d'un axe (18) de la broche porte-outil avec un rapport de vitesse de rotation prédéterminé par rapport à-la roue à usiner (1), la fraise-mère présentant des dents de fraise (11, 21) dont les bases (14, 24) s'étendent sur une ligne de base (15) dans une vue en coupe longitudinale à travers la fraise-mère suivant l'axe (18) de la broche porte-outil et dont les têtes (13, 23) s'étendent sur une ligne de tête (16) dans la coupe longitudinale, la ligne de tête (16) étant inclinée d'un angle aigu (α) par rapport à la ligne de base (15) et dans lequel on fait avancer la fraise-mère (10) par rapport à la roue à usiner (1), le mouvement d'avance présentant une composante axiale en direction de l'axe (7) de la broche porte-pièce, une composante radiale sensiblement transversale à la direction de l'axe (7) de la broche porte-pièce et une composante de décalage (direction z) en direction de l'axe (18) de la broche porte-outil, **caractérisé en ce qu'**on utilise une fraise-mère dont la ligne de base (15) s'étend parallèlement à l'axe de rotation de la fraise-mère et que par rapport à une ligne de tête imaginaire de construction (17) s'étendant parallèlement à la ligne de base (15), les dents de fraise (11, 21) sont régulièrement espacées et présentent sensiblement une même conformation, le mouvement d'avance étant exécuté de manière à ce que les têtes (13, 23) des dents de la fraise-mère présentent une profondeur de pénétration maximale dans la roue à usiner (1) qui reste sensiblement constante.

3. Dispositif selon la revendication 1 ou procédé selon la revendication 2, **caractérisé en ce que** l'axe (7) de la broche porte-pièce s'étend suivant une direction x, l'axe (18) de la broche porte-outil s'étend suivant une direction z perpendiculaire à la direction x et l'axe (7) de la broche porte-pièce est décalé par rapport à l'axe (18) de la broche porte-outil suivant une direction y qui est perpendiculaire à la direction x et perpendiculaire à la direction z.

4. Procédé selon l'une des revendications 2 ou 3, **caractérisé en ce que** la composante du mouvement d'avance dans la direction de décalage et la composante du mouvement d'avance en direction radiale sont adaptées par rapport à l'angle d'inclinaison (α) de manière à ce que les bases (5) des dents (2) usinées sur la pièce à usiner s'étendent sur une surface d'enveloppe cylindrique se rapportant à l'axe (7) de la broche porte-pièce.

5. Fraise-mère (10) pour utilisation avec un dispositif ou dans un procédé selon l'une des revendications précédentes, laquelle fraise-mère (10) présente des dents de fraise (11) agencées suivant une hélice autour d'un axe de rotation (7) dont les bases (14, 24) s'étendent en coupe longitudinale sur une ligne de base (15), **caractérisé en ce que** la ligne de base (15) s'étend parallèlement à l'axe (18) de la broche porte-outil et que, par rapport à une ligne de tête imaginaire de construction (17) s'étendant parallèlement à la ligne de base (15), les dents de fraise (11, 21) sont régulièrement espacées et présentent sensiblement une même conformation.

6. Dispositif, procédé ou fraise-mère selon l'une des revendications précédentes, **caractérisé en ce que** les flancs (12, 22) des dents de fraise sont inclinés avec un angle obtus par rapport à leur tête (13, 23) et à leur base (14, 24) de manière à ce que les espaces d'entredents soient sensiblement en forme de V en coupe longitudinale.

7. Dispositif, procédé ou fraise-mère selon l'une des revendications précédentes, **caractérisé en ce que** l'angle d'inclinaison (α) est dans l'intervalle entre 2° et 10°.

8. Procédé de fabrication d'une fraise-mère selon l'une des revendications précédentes, dans lequel on réalise, au moyen d'un procédé d'usinage par enlèvement de copeaux, des dents de fraise (11, 21) régulièrement espacées et ayant sensiblement une même conformation sur une ligne hélicoïdale autour de l'axe de rotation (18) de la fraise-mère, les bases (14, 24) des dents de fraise s'étendant sur une ligne de base (15) et les têtes (13, 23) des dents de fraise s'étendant sur une ligne de tête de construction (17) qui lui est parallèle, **caractérisé par** un meulage conique consécutif de la surface d'enveloppe de la fraise-mère (10) jusqu'à ce que les têtes (13, 23) des dents de fraise s'étendent sur une ligne de tête (16) qui est inclinée avec un angle (α) par rapport à la ligne de base (15).
